# EUROPEAN PATENT APPLICATION

(11) **EP 4 692 022 A1**
(43) Date of publication of application: **11.02.2026**
(21) Application number: 24780524.5
(22) Date of filing: 27.03.2024
(51) Int. Cl.: C04B 35/195, G02B 23/00, G02B 23/16

(54) **CERAMIC SINTERED COMPACT AND TELESCOPE**

(30) Priority: 30.03.2023 JP 2023056221
(71) Applicant: Kyocera Corporation, Kyoto-shi, Kyoto 612-8501 (JP)
(72) Inventor: IWASHITA, Shuzo, Kyoto-shi, Kyoto 612-8501 (JP); YOSHIMITSU, Hiroshi, Kyoto-shi, Kyoto 612-8501 (JP)
(74) Representative: Viering, Jentschura & Partner mbB Patent- und Rechtsanwälte
(86) International application number: PCT/JP2024/012404
(87) International publication number: WO 2024/204422

(57) **Abstract**

Disclosed herein is a ceramic sintered compact containing a cordierite crystal and a spinel crystal. The sum of the content of the cordierite crystal and the content of the spinel crystal is equal to or greater than 95 mass%. The content of the spinel crystal is equal to or greater than 0.1 mass% and equal to or less than 17 mass%.

## Description

### TECHNICAL FIELD

The disclosed embodiments relate to a ceramic sintered compact and a telescope.

### BACKGROUND OF INVENTION

In recent years, ceramic members having low thermal expansion properties have been used in apparatuses in various fields. As such low thermal expansion ceramics, cordierite ceramics have recently attracted attention (See, for example, Patent Document 1).

### CITATION LIST

### PATENT DOCUMENT

Patent Document 1: JP 2016-204198 A

### SUMMARY

In one aspect of an embodiment, a ceramic sintered compact contains a cordierite crystal and a spinel crystal. The sum of the content of the cordierite crystal and the content of the spinel crystal is equal to or greater than 95 mass%. The content of the spinel crystal is equal to or greater than 0.1 mass% and equal to or less than 17 mass%.

### DESCRIPTION OF EMBODIMENTS

Hereinafter, embodiments of a ceramic sintered compact and a telescope disclosed in the present application will be described. Note that the present disclosure is not limited to the embodiments set forth below.

In recent years, ceramic members having low thermal expansion properties have been used in apparatuses in various fields. As such low thermal expansion ceramics, cordierite ceramics have been gaining attention in recent years.

However, the known technologies mentioned above have room for further improvement in terms of using cordierite ceramics in various fields. Therefore, a ceramic sintered compact is expected to be realized which can solve the above problems and can be used in various fields.

The temperature dependence of the coefficient of thermal expansion of cordierite ceramics is known to indicate a linear straight line over the range from equal to or lower than -100°C to near room temperature. The zero-crossing temperature of the coefficient of thermal expansion of known cordierite ceramics is near room temperature, for example, near 22°C. Note that, in the present disclosure, the zero-crossing temperature of the coefficient of thermal expansion is also referred to as "ZCT".

In the related arts, cordierite ceramics have been used for members for which dimensional changes due to temperature changes are not favorable, such as members for semiconductor exposure apparatuses and optical members such as mirrors for telescopes. Such members for which dimensional changes due to temperature changes are not favorable use low thermal expansion glass, for example.

However, the Young's modulus of the low-expansion glass is small and is equal to or less than 100 GPa, and a specific stiffness, which is determined by dividing the Young's modulus by the specific gravity, is low and is in the level of 30 GPa/g/cm³, and therefore when the low-expansion glass is used for a mirror for an artificial satellite, the low-expansion glass has had a concern that the impact during launch would damage the low-expansion glass if it was made thinner. Furthermore, a problem of increased weight during launch has occurred upon increasing the thickness of the low-expansion glass to ensure the strength.

This problem can be addressed by cordierite ceramics, because cordierite ceramics have a large Young's modulus of about 140 GPa and a specific stiffness of about 55 GPa/g/cm ³, thereby enabling the member to be thinner and the weight of the apparatus to be reduced, as compared with the low-expansion glass. This has been attracting attention in recent years because of a great merit of reducing launch costs of apparatus that is designed to be launched into space.

On the other hand, the temperature dependence of the coefficient of thermal expansion of the cordierite ceramics is larger than that of the low-expansion glass, and hence the cordierite ceramics need to be used at a temperature near the ZCT when the zero expansion properties are utilized.

Accordingly, when cordierite ceramics are used in a member mounted on an artificial satellite, for example, the temperature inside the apparatus needs to be adjusted to maintain the member temperature near 22°C, that is the ZCT, and the temperature in the vicinity of the member using the cordierite ceramics is needed to be particularly strictly controlled.

Accordingly, when a plurality of members uses cordierite ceramics, temperature adjustment is required for each member, and thus apparatus design becomes complicated. Thus, problems occur such as an increased manufacturing cost, an increase in weight due to increased accessory apparatuses, and an increased electric power consumption in a spacecraft where power supply is limited.

Regarding this problem, controlling the ZCT of the cordierite ceramics in accordance with the operating temperature of the apparatus is thought to resolve the above problem.

As used herein, in an embodiment, the ceramic sintered compact may contain a cordierite crystal and a spinel crystal. The sum of the content of the cordierite crystal and the content of the spinel crystal may be equal to or greater than 95 mass%. The content of the spinel crystal may be equal to or greater than 0.1 mass% and equal to or less than 17 mass%.

The ZCT of the cordierite ceramics with such a composition can be controlled to be within the range of from -120°C to 45°C. Therefore, in an embodiment, the cordierite ceramics can be used in various fields including the space field. Cordierite ceramics having a required ZCT can be provided as desired.

In an embodiment, the ceramic sintered compact may contain the spinel crystal in an amount equal to or less than 5 mass%. When the spinel crystal with higher permittivity than that of the cordierite crystal is contained in an amount of equal to or less than 5 mass%, cordierite ceramics with relatively low permittivity can be provided.

In an embodiment, the ceramic sintered compact may contain cordierite crystal in an amount equal to or greater than 90 mass%. When the cordierite crystal with lower permittivity than that of spinel crystal is contained in an amount of equal to or greater than 90 mass%, cordierite ceramics with relatively low permittivity can be provided.

In an embodiment, when the Rietveld analysis of an X-ray diffraction pattern of the ceramic sintered compact detects a crystal other than the cordierite crystal and the spinel crystal, the total amount of the other crystal may be equal to or less than 3 mass%.

When the precipitation amount of the crystal phase other than cordierite and spinel crystal phases is equal to or less than 3 mass%, the sintering temperature dependence of ZCT is relatively small, and a sintered compact with a desired ZCT can be easily produced. In particular, when a sintered compact has a large shape, a temperature difference between the outer peripheral portion and the central portion of the sintered compact occurs during sintering, and therefore, the precipitation amount of the crystal phase other than cordierite and spinel crystal phases is preferably equal to or less than 3 mass%.

In an embodiment, when ZCT is defined as a reference temperature, the ceramic sintered compact may have a coefficient of thermal expansion within 0 ± 1 ppb/K over the range of temperature from the reference temperature -1K to the reference temperature +1K. Thus, the ceramic sintered compact has a reduced dimensional change near the ZCT.

In an embodiment, the ZCT of the ceramic sintered compact may be equal to or higher than -100°C and equal to or lower than 35°C. Thus, the ceramic sintered compact can be used in various fields including the space field.

In an embodiment, the ceramic sintered compact may have a relative permittivity of equal to or greater than 4 and equal to or less than 5, as measured at a frequency of 10 GHz. The ceramic sintered compact with such a configuration can reduce signal delay when the ceramic sintered compact of the present disclosure is used as a substrate for a high-frequency circuit, for example.

In an embodiment, the ceramic sintered compact may have a specific gravity of equal to or less than 2.8 g/cm³. Thus, launch costs can be reduced when cordierite ceramics are used in the space field.

In an embodiment, the ceramic sintered compact may have a specific stiffness of equal to or greater than 50 GPa/g/cm³. Thus, launch costs can be reduced when cordierite ceramics are used in the space field.

In an embodiment, the ceramic sintered compact may be substantially free of a mullite crystal. Thus, the surface roughness after machining can be reduced, and hence the ceramic sintered compact is suitable for an optical member such as a reflection mirror member.

In an embodiment, the ceramic sintered compact may be dense. The ceramic sintered compact with such a configuration is excellent in strength. In an embodiment, the ceramic sintered compact may have a water absorption equal to or less than 0.05%. The ceramic sintered compact with such a configuration can have a surface with less asperity when the surface is mirror polished.

Furthermore, in an embodiment, for the ceramic sintered compact, it is important to maintain homogeneity within the sintered compact. This means small variations of CTE (coefficient of thermal expansion) and/or of ZCT among portions in the sintered compact, and may be such homogeneity allowing variations of CTE within ±20 ppb/K, and variations of ZCT within ±1°C as in reflective mirror members used in the astronomy and space field, for example.

In an embodiment, a telescope may include the ceramic sintered compact described above as a mirror component. In an embodiment, a telescope may include the ceramic sintered compact described above as a support member directly or indirectly supporting a mirror component. In an embodiment, a telescope may include the ceramic sintered compact described above as a mirror component and a support member directly or indirectly supporting the mirror component.

Thus, vibrations caused by inertia can be reduced in an astronomical telescope in outer space, even when the speed of optical axis alignment is increased. Accordingly, in an embodiment, the optical axis alignment can be sped up. The whole apparatus can have enhanced vibration-damping properties. High mechanical strength results in excellent long-term reliability. Furthermore, lightweight and high stiffness can reduce launch costs.

### EXAMPLES

The cordierite ceramics according to the present embodiments were specifically produced, and the characteristics thereof were evaluated. First, as respective feedstock powders of Mg, Al, and Si were provided powders of magnesium hydroxide (Mg(OH)₂), alumina, and silicon dioxide.

As feedstock powders, powder of a synthetic cordierite feedstock represented by Mg₂Al₄Si₅O₁₈ was provided, and calcium carbonate powder was provided. Note that, the provided magnesium hydroxide powder had a purity of 99.3%, the alumina powder had a purity of 99.9%, the silicon dioxide powder had a purity of 99.5%, and the calcium carbonate powder had a purity of 99.5%.

The magnesium hydroxide powder, the alumina powder, and the silicon dioxide powder were mixed at a plurality of ratios at which MgO : Al₂O₃ : SiO₂ was from 2 : 2.4 : 5 to 3 : 2.4 : 5 in terms of mole ratio, thereby preparing a plurality of types of raw material mixture powder.

The synthetic cordierite feedstock powder and the raw material mixture powder were then mixed at a mass ratio of 70 : 30. Furthermore, 0.892 mass% of calcium carbonate was mixed by external addition, and a binder, for example, paraffin wax was added thereto to prepare a plurality of types of granulated powder.

The prepared plurality of types of granulated powder was press-compacted to produce a plurality of types of cylindrical green compacts each having a diameter of 150 mm and a height of 100 mm, and the green compacts were sintered in the air to produce cordierite ceramics samples Nos. 1 to 39. Note that, the sintering temperature of each sample was 1375°C, and each sample was held at the sintering temperature for 7 hours.

Note that, ICP emission spectrometry of each of the prepared samples had determined that each sample had a composition consistent with the formulation composition.

The produced samples Nos. 1 to 39 were evaluated as follows. Powder X-ray diffraction and the Rietveld method were used to identify crystal phases and to measure the percentage of the crystal phases. One of each sample was used in this measurement.

Based on dimensions at 22°C, thermal expansion characteristics were measured in the range of temperature from -100°C to 50°C by using an optical heterodyne interferometer. Then, the temperature dependence of the coefficient of thermal expansion was determined from the measured data, and the temperature at which the coefficient of thermal expansion indicated zero was defined as ZCT.

The ZCT of each sample determined by the above method was defined as a reference temperature, the coefficient of thermal expansion of each sample was measured in the range of temperature from the reference temperature -1K to the reference temperature +1K, and the determined coefficient of thermal expansion was defined as the coefficient of thermal expansion of each sample near the ZCT (CTE at ZCT).

The bulk density and the water absorption were measured by Archimedes' method. Note that, all of the samples each had a water absorption of 0.0%. Young's modulus was measured by the ultrasonic resonance method. The size of the sample used for the measurement was 10 mm in diameter and 5 mm in height. The Young's modulus was divided by the bulk density to determine the specific stiffness.

The thermal conductivity was measured by Laser flash method. For flexural strength, each sample was machined to produce a test piece specified in JIS R 1601, which was then used to determine the four-point bending strength thereof. Fracture toughness was measured in accordance with the indentation fracture method defined in JIS R 1607-1995.

The void content was measured by the following procedure. First, each sample was cut to create a cross-section and the cross-section was then mirror-polished. The percentage of an area occupied by openings of voids (area%) was determined in the measurement region of the cross-section. Then, this percentage was regarded as the void content (vol%), thereby determining the void content of each sample.

For relative permittivity, the dielectric rod resonator method (International Standard IEC 61338-1-3 (1999)) measured the relative permittivity at a measurement frequency of 10 GHz.

Here, for samples Nos. 1 to 39, Table 1 and Table 2 show the measurement results of the sum of the content of the cordierite crystal and the content of the spinel crystal, the content of cordierite crystal, the content of spinel crystal, the ZCT, the coefficient of thermal expansion near the ZCT, the bulk density, the Young's modulus, the specific stiffness, the thermal conductivity, the flexural strength, the fracture toughness, the void content, and the relative permittivity. Note that, the mass% in "Other crystal" in Tables 1 and 2 means the mass% of only the crystal other than the cordierite crystal and spinel crystal, and excludes the mass of vitreous substances. Examples of the other crystal include enstatite and forsterite.

### [Table 1]

**(Table 1)**

| Sample No. | Cordierite crystal + Spinel crystal | Cordierite crystal | Spinel crystal | Other crystal | Zero-crossing temperature | CTE at ZCT | Bulk density | Young's modulus | Specific stiffness | Thermal conductivity | Flexural strength | Fracture toughness | Void content | Relative permittivity (at 10 GHz) |
|---|---|---|---|---|---|---|---|---|---|---|---|---|---|---|
| | (mass%) | (mass%) | (mass%) | (mass%) | (°C) | (ppb/K) | (g/cm³) | (GPa) | (GPa/ g/cm³) | (W/mK) | (MPa) | **(Mpa** ·m^{1/2}) | (%) | |
| 1 | 95.0 | 95.0 | 0.0 | 5.0 | 50 | 1 | 2.54 | 138 | 54 | 2.7 | 182 | 2.0 | 0.00 | 4.5 |
| 2 | 94.0 | 93.9 | 0.1 | 6.0 | 47 | 1 | 2.53 | 134 | 53 | 2.5 | 169 | 1.9 | 0.00 | 4.4 |
| 3 | 95.0 | 94.9 | 0.1 | 5.0 | 45 | 2 | 2.54 | 140 | 55 | 3.0 | 180 | 2.0 | 0.00 | 4.5 |
| 4 | 99.5 | 98.8 | 0.7 | 0.5 | 35 | -1 | 2.54 | 144 | 57 | 4.5 | 242 | 2.2 | 0.00 | 4.7 |
| 5 | 99.4 | 98.2 | 1.2 | 0.6 | 30 | 2 | 2.55 | 145 | 57 | 4.9 | 243 | 2.3 | 0.01 | 4.7 |
| 6 | 99.8 | 97.6 | 2.2 | 0.2 | 25 | 1 | 2.54 | 144 | 57 | 4.6 | 245 | 2.2 | 0.01 | 4.7 |
| 7 | 99.8 | 97.1 | 2.7 | 0.2 | 20 | 3 | 2.55 | 146 | 57 | 5.0 | 244 | 2.3 | 0.01 | 4.7 |
| 8 | 99.3 | 96.5 | 2.8 | 0.7 | 15 | 2 | 2.55 | 145 | 57 | 4.9 | 243 | 2.2 | 0.01 | 4.7 |
| 9 | 95.0 | 78.0 | 17.0 | 5.0 | -110 | 1 | 2.83 | 139 | 49 | 6.0 | 247 | 2.0 | 0.01 | 5.0 |
| 10 | 97.0 | 79.0 | 18.0 | 3.0 | -121 | 2 | 2.81 | 168 | 60 | 6.3 | 246 | 2.1 | 0.01 | 4.8 |
| 11 | 94.0 | 77.0 | 17.0 | 6.0 | -109 | 1 | 2.79 | 167 | 60 | 6.1 | 247 | 2.0 | 0.01 | 5.1 |
| 12 | 96.0 | 95.0 | 1.0 | 4.0 | -4 | 2 | 2.56 | 145 | 57 | 4.2 | 183 | 2.2 | 0.00 | 4.8 |
| 13 | 97.0 | 93.0 | 4.0 | 3.0 | 3 | 1 | 2.59 | 149 | 58 | 4.5 | 243 | 2.1 | 0.01 | 4.8 |
| 14 | 97.0 | 92.0 | 5.0 | 3.0 | 0 | 1 | 2.62 | 151 | 58 | 4.6 | 249 | 2.2 | 0.01 | 4.9 |
| 15 | 97.0 | 91.0 | 6.0 | 3.0 | -10 | 2 | 2.65 | 153 | 58 | 4.6 | 250 | 2.3 | 0.01 | 5.1 |
| 16 | 96.0 | 92.0 | 4.0 | 4.0 | 1 | 0 | 2.59 | 150 | 58 | 4.5 | 244 | 2.2 | 0.01 | 4.9 |
| 17 | 96.0 | 91.0 | 5.0 | 4.0 | -3 | 1 | 2.63 | 153 | 58 | 4.6 | 250 | 2.2 | 0.01 | 5.0 |
| 18 | 96.0 | 90.0 | 6.0 | 4.0 | -14 | 1 | 2.66 | 155 | 58 | 4.7 | 252 | 2.3 | 0.01 | 5.1 |
| 19 | 89.0 | 88.0 | 1.0 | 11.0 | -67 | 1 | 2.56 | 145 | 57 | 4.2 | 244 | 2.2 | 0.01 | 4.9 |
| 20 | 90.0 | 89.0 | 1.0 | 10.0 | -60 | -1 | 2.56 | 145 | 57 | 4.2 | 243 | 2.2 | 0.01 | 4.9 |

**[Table 2]**

| Sample No. | Cordierite crystal + Spinel crystal | Cordierite crystal | Spinel crystal | Other crystal | Zero-crossing temperature | CTE at ZCT | Bulk density | Young's modulus | Specific stiffness | Thermal conductivity | Flexural strength | Fracture toughness | Void content | Relative permittivity (at 10 GHz) |
|---|---|---|---|---|---|---|---|---|---|---|---|---|---|---|
| | (mass%) | (mass%) | (mass%) | (mass%) | (°C) | (ppb/K) | (g/cm³) | (GPa) | **(GPa/** g/cm³) | (W/mK) | (MPa) | **(Mpa** ·m^{1/2}) | (%) | |
| 21 | 94.0 | 93.0 | 1.0 | 6.0 | -11 | 0 | 2.56 | 146 | 57 | 4.0 | 246 | 2.1 | 0.02 | 4.8 |
| 22 | 98.9 | 95.9 | 3.0 | 1.1 | 10 | -1 | 2.55 | 145 | 57 | 5.1 | 244 | 2.2 | 0.00 | 4.7 |
| 23 | 97.0 | 93.0 | 4.0 | 3.0 | -11 | 1 | 2.59 | 148 | 57 | 4.5 | 240 | 2.2 | 0.02 | 4.7 |
| 24 | 100.0 | 99.0 | 1.0 | 0.0 | 33 | 1 | 2.56 | 145 | 57 | 4.1 | 242 | 2.2 | 0.01 | 4.8 |
| 25 | 97.0 | 96.0 | 1.0 | 3.0 | 12 | -1 | 2.56 | 146 | 57 | 4.0 | 241 | 2.1 | 0.01 | 4.8 |
| 26 | 99.0 | 95.7 | 3.3 | 1.0 | 8 | 0 | 2.56 | 146 | 57 | 4.9 | 246 | 2.3 | 0.00 | 4.7 |
| 27 | 99.5 | 95.9 | 3.6 | 0.5 | 5 | 1 | 2.55 | 147 | 58 | 5.0 | 243 | 2.2 | 0.00 | 4.7 |
| 28 | 99.6 | 95.1 | 4.5 | 0.4 | 3 | 2 | 2.55 | 147 | 58 | 4.8 | 241 | 2.2 | 0.01 | 4.7 |
| 29 | 99.8 | 94.8 | 5.0 | 0.2 | 0 | 0 | 2.56 | 147 | 57 | 4.6 | 241 | 2.2 | 0.01 | 4.8 |
| 30 | 99.7 | 94.2 | 5.5 | 0.3 | -5 | -1 | 2.56 | 148 | 58 | 4.8 | 242 | 2.3 | 0.01 | 4.8 |
| 31 | 99.3 | 93.3 | 6.0 | 0.7 | -10 | 2 | 2.55 | 150 | 59 | 4.7 | 243 | 2.2 | 0.00 | 4.8 |
| 32 | 100.0 | 91.7 | 8.3 | 0.0 | -25 | 0 | 2.56 | 151 | 59 | 4.6 | 245 | 2.3 | 0.00 | 4.8 |
| 33 | 100.0 | 91.4 | 8.6 | 0.0 | -30 | -2 | 2.56 | 153 | 60 | 4.4 | 243 | 2.2 | 0.01 | 4.9 |
| 34 | 100.0 | 83.0 | 17.0 | 0.0 | -120 | -2 | 2.73 | 170 | 62 | 6.1 | 248 | 2.2 | 0.00 | 5.1 |
| 35 | 100.0 | 82.0 | 18.0 | 0.0 | -130 | -2 | 2.81 | 171 | 61 | 6.3 | 250 | 2.2 | 0.00 | 5.0 |
| 36 | 90.0 | 90.0 | 0.0 | 10.0 | -52 | -1 | 2.56 | 144 | 56 | 3.9 | 240 | 2.2 | 0.01 | 5.0 |
| 37 | 89.0 | 89.0 | 0.0 | 11.0 | -61 | 0 | 2.55 | 143 | 56 | 3.7 | 237 | 2.2 | 0.02 | 5.0 |
| 38 | 99.8 | 86.8 | 13.0 | 0.2 | -70 | 1 | 2.56 | 155 | 61 | 4.5 | 244 | 2.2 | 0.01 | 4.9 |
| 39 | 99.9 \| | 83.4 | 16.5 | 0.1 | -100 | -1 | 2.56 | 156 | 61 | 4.4 | 244 | 2.3 | 0.00 | 4.9 |

As shown in Tables 1 and 2, when the sum of the content of the cordierite crystal and the content of spinel crystal is equal to or greater than 95 mass%, and the content of the spinel crystal is equal to or greater than 0.1 mass% and equal to or less than 17 mass%, the
ZCT can be controlled in the range of from -120°C to 45°C. Therefore, the embodiments can solve the above-described problem.

As shown in Tables 1 and 2, when the sum of the content of the cordierite crystal and the content of the spinel crystal is equal to or greater than 95 mass%, and the content of the spinel crystal is equal to or greater than 0.1 mass% and equal to or less than 9 mass%, the ZCT can be controlled in the range of from -30°C to 45°C. Therefore, the embodiments can solve the above-described problem.

As shown in Tables 1 and 2, the samples each of which has a specific stiffness of equal to or greater than 55 GPa/g/cm³ enable to create a member thinner than that of low-expansion glass, thereby enabling to reduce the weight of apparatus.

ZCT was measured for each sample shown in Tables 1 and 2. The values of ZCT are listed in the column of ZCT (1) in Table 3 below. The ZCT of the sample sintered at a temperature that is higher than the sintering temperature by 50°C was measured. The ZCT of the sample sintered at that temperature is indicated as ZCT (2) in Table 3. Furthermore, the difference between ZCT (1) and ZCT (2) is indicated in Table 3. The smaller this difference is, the smaller the change in ZCT due to the sintering temperature is.

### [Table 3]

**(Table 3)**

| Sample No. | Cordierite crystal + Spinel crystal | Cordierite crystal | Spinel crystal | Other crystal | ZCT(1) | ZCT(2) | Amount of ZCT change in response to 50°C change in sintering temperature |
|---|---|---|---|---|---|---|---|
| | (mass%) | (mass%) | (mass%) | (mass%) | (°C) | (°C) | (°C) |
| 1 | 99.8 | 97.1 | 2.7 | 0.2 | 20.0 | 20.0 | 0.0 |
| 9 | 95.0 | 78.0 | 17.0 | 5.0 | -110.0 | -112.4 | 2.4 |
| 12 | 96.0 | 95.0 | 1.0 | 4.0 | -4.0 | -6.8 | 2.8 |
| 16 | 96.0 | 92.0 | 4.0 | 4.0 | 1.0 | -1.7 | 2.7 |
| 17 | 96.0 | 91.0 | 5.0 | 4.0 | -3.0 | -5.8 | 2.8 |
| 18 | 96.0 | 90.0 | 6.0 | 4.0 | -14.0 | -17.0 | 3.0 |
| 19 | 89.0 | 88.0 | 1.0 | 11.0 | -67.0 | -70.7 | 3.7 |
| 20 | 90.0 | 89.0 | 1.0 | 10.0 | -60.0 | -63.6 | 3.6 |
| 21 | 94.0 | 93.0 | 1.0 | 6.0 | -11.0 | -14.4 | 3.4 |
| 36 | 90.0 | 90.0 | 0.0 | 10.0 | -52.0 | -55.6 | 3.6 |
| 37 | 89.0 | 89.0 | 0.0 | 11.0 | -61.0 | -64.7 | 3.7 |

Hereinabove, the embodiments of the present disclosure have been described, but the present disclosure is not limited to the above embodiments, and various changes can be made without departing from the spirit of the present disclosure.

The embodiments disclosed herein each are to be understood as exemplary in all respects and not restrictive. Indeed, each of the above embodiments can be embodied in various forms. Each of the above embodiments may be omitted, replaced, or changed in various forms without departing from the scope and spirit of the appended claims.

Note that the present technology can also be in the following configurations.
(1) A ceramic sintered compact,
   containing a cordierite crystal and a spinel crystal,
   in which a sum of a content of the cordierite crystal and a content of the spinel crystal is equal to or greater than 95 mass%, and
   the content of the spinel crystal is equal to or greater than 0.1 mass% and equal to or less than 17 mass%.
(2) The ceramic sintered compact according to (1),
   in which the content of the spinel crystal is equal to or less than 5 mass%.
(3) The ceramic sintered compact according to (1) or (2),
   in which the content of the cordierite crystal is equal to or greater than 90 mass%.
(4) The ceramic sintered compact according to any one of (1) to (3),
   in which when Rietveld analysis of an X-ray diffraction pattern of the ceramic sintered compact detects a crystal other than the cordierite crystal and from the spinel crystal, a total amount of the other crystal is equal to or less than 3 mass%.
(5) The ceramic sintered compact according to any one of (1) to (4),
   in which when a zero-crossing temperature of a coefficient of thermal expansion is defined as a reference temperature, the coefficient of thermal expansion is within 0 ± 1 ppb/K over the range of temperature from the reference temperature minus 1K to the reference temperature plus 1K.
(6) The ceramic sintered compact according to any one of (1) to (5),
   in which the zero-crossing temperature of a coefficient of thermal expansion is equal to or higher than -100°C and equal to or lower than 35°C.
(7) The ceramic sintered compact according to any one of (1) to (6),
   in which a relative permittivity is equal to or greater than 4 and equal to or less than 5, as measured at a frequency of 10 GHz.
(8) The ceramic sintered compact according to any one of (1) to (7),
   in which a specific gravity is equal to or less than 2.8 g/cm³.
(9) The ceramic sintered compact according to any one of (1) to (8),
   in which a specific stiffness is equal to or greater than 50 GPa/g/cm³.
(10) A telescope,
   including, as a mirror component, the ceramic sintered compact described in any one of (1) to (9).
(11) A telescope,
   including, as a support member directly or indirectly supporting a mirror component, the ceramic sintered compact described in any one of (1) to (9).
(12) A telescope,
   including, as a mirror component and a support member directly or indirectly supporting the mirror component, the ceramic sintered compact described in any one of (1) to (9).

## Claims

1. A ceramic sintered compact,
comprising a cordierite crystal and a spinel crystal,
wherein a sum of a content of the cordierite crystal and a content of the spinel crystal is equal to or greater than 95 mass%, and
the content of the spinel crystal is equal to or greater than 0.1 mass% and equal to or less than 17 mass%.

2. The ceramic sintered compact according to claim 1,
wherein the content of the spinel crystal is equal to or less than 5 mass%.

3. The ceramic sintered compact according to claim 1 or 2,
wherein the content of the cordierite crystal is equal to or greater than 90 mass%.

4. The ceramic sintered compact according to any one of claims 1 to 3,
wherein when Rietveld analysis of an X-ray diffraction pattern of the ceramic sintered compact detects a crystal other than the cordierite crystal and the spinel crystal, a total amount of the other crystal is equal to or less than 3 mass%.

5. The ceramic sintered compact according to any one of claims 1 to 4,
wherein when a zero-crossing temperature of a coefficient of thermal expansion is defined as a reference temperature, the coefficient of thermal expansion is within 0 ± 1 ppb/K over a range of temperature from the reference temperature minus 1K to the reference temperature plus 1K.

6. The ceramic sintered compact according to any one of claims 1 to 5,
wherein the zero-crossing temperature of a coefficient of thermal expansion is equal to or higher than -100°C and equal to or lower than 35°C.

7. The ceramic sintered compact according to any one of claims 1 to 6,
wherein a relative permittivity is equal to or greater than 4 and equal to or less than 5, as measured at a frequency of 10 GHz.

8. The ceramic sintered compact according to any one of claims 1 to 7,
wherein a specific gravity is equal to or less than 2.8 g/cm³.

9. The ceramic sintered compact according to any one of claims 1 to 8,
wherein a specific stiffness is equal to or greater than 50 GPa/g/cm³.

10. A telescope,
comprising, as a mirror component, the ceramic sintered compact described in any one of claims 1 to 9.

11. A telescope,
comprising, as a support member directly or indirectly supporting a mirror component, the ceramic sintered compact described in any one of claims 1 to 9.

12. A telescope,
comprising, as a mirror component and a support member directly or indirectly supporting the mirror component, the ceramic sintered compact described in any one of claims 1 to 9.
